(19) Europäisches Patentamt
European Patent Office
Office européen des brevets

(11) **EP 3 457 624 A1**

(12) **EUROPEAN PATENT APPLICATION**

(43) Date of publication:
**20.03.2019 Bulletin 2019/12**

(51) Int Cl.:
**H04L 9/08** *(2006.01)*

(21) Application number: **17190780.1**

(22) Date of filing: **13.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Aktiengesellschaft 80333 München (DE)**

(72) Inventors:
• **Cuellar, Jorge**
  **82065 Baierbrunn (DE)**
• **Gasiba, Tiago**
  **81549 München (DE)**

Remarks:
Amended claims in accordance with Rule 137(2) EPC.

(54) **A METHOD FOR SENDING DIGITAL DATA OVER A NUMBER OF CHANNELS**

(57) The invention refers to a method for sending digital data over a number of channels (CH, CH1', CH2', ..., CHn'), wherein a sender (A) performs the following steps:
- generating (GEN) one or more secret values (v1, v2, ..., vn) ;
- encrypting (CRY) source data (S) by an encryption process (CRY) which is based on the one or more secret values (v1, v2, ..., vn) ;
- feeding in parallel the encrypted source data (SE) and one or more parameters (p1, p2, ..., pn) to a number of channels (CH, CH1', CH2', ..., CHn') connected to a receiver (B), where each parameter (p1, p2, ..., pn) is a respective secret value (v1, v2, ..., vn) or a value derived from a respective secret value (v1, v2, ..., vn) of the number of secret values (v1, v2, ..., vn) and where the number of channels (CH, CH1', CH2', ..., CHn') comprises a number of first channels (CH) and a number of second channels (CH1', CH2', ..., CHn'), each first channel (CH) being independent of each second channel (CH1', CH2', ..., CHn'), where the encrypted source data (SE) are fed to the number of first channels (CH) and the one or more parameters (p1, p2, ..., pn) are fed to the number of second channels (CH1', CH2', ..., CHn').

EP 3 457 624 A1

**Description**

The invention refers to a method for sending digital data over a number of channels. Furthermore, the invention refers to a method for processing digital data sent by the method for sending digital data. Moreover, the invention refers to a method for transmitting digital data from a sender to a receiver as well as to a corresponding sender and receiver. Moreover, the invention refers to a transmission system comprising a sender and a receiver.

Encryption techniques are widely used in order to provide secure communications between senders and receivers. For encrypting data transmissions, there is usually the need of an exchange of cryptographic keys between sender and receiver before initiating the transmission. This makes the implementation of encryption methods complex.

It is an object of the invention to provide a method for sending digital data over a number of channels enabling an encryption of the data without a previous transfer of cryptographic keys. Furthermore, it is an object of the invention to provide a method to reconstruct source data from the digital data sent by the method of the invention.

This object is solved by the independent patent claims. Preferred embodiments of the invention are described in the dependent claims.

The method of the invention provides a mechanism for sending digital data over a number of channels, i.e. over at least one channel. The term "channel" is to be interpreted broadly and may refer to any continuous transmission path from a sender to a receiver. I.e., a channel may also have different channel portions being based on different transmission techniques. In the method of the invention, a sender performs the steps as described in the following.

At first, the sender generates one or more secret values where a secret value can be any digital data structure. The term "secret value" means that the value is only known by the sender when being generated. This can be achieved by generating the secret value randomly, i.e. by using a pseudo-random function which is the function of a pseudo-random generator. The terms "pseudo-random function" as well as "pseudo-random generator" are well-known for a skilled person.

After having generated the one or more secret values, the sender performs an encryption of source data by an encryption process which is based on the one or more secret values. The source data may refer to any digital data structure. In a preferred embodiment, the source data are a sequence of a plurality of bits.

In a next step, the sender feeds in parallel (i.e. substantially simultaneously) the encrypted source data as well as one or more parameters to a number of channels connected to a receiver by which the encrypted source data shall be received. Each parameter is a respective secret value or a value derived from a respective secret value of the number of secret values. E.g., all parameters may be secret values or all parameters may be values derived from the secret values. However, it is also possible that some parameters are secret values whereas the other parameters are values derived from respective secret values. The number of channels used by the sender comprises a number of first channels and a number of second channels, each first channel being independent of each second channel, where the encrypted source data are fed to the number of first channels and the one or more parameters are fed to the number of second channels. The term "independent channels" means that an access to one channel does not permit an access to any other independent channel.

The invention has the advantage that there is no need for a previous key transfer because the secret values used for encryption are transmitted simultaneously with the encrypted source data. Furthermore, a high security against attacks is achieved by using independent channels for transmitting the encrypted source data and the secret values.

In a preferred embodiment, the number of first channels comprises several first channels, where a different portion of the encrypted source data is fed to each first channel. Preferably, the first channels are independent of each other. This embodiment enhances the protection against security attacks due to the use of several channels for transmitting the encrypted source data.

In another variant of the invention, the one or more parameters comprise several parameters, where each parameter is fed to a separate second channel. Preferably, the second channels are independent of each other. This variant also achieves a higher protection against security attacks.

In another preferred embodiment, the number of channels are channels of a multipath TCP protocol. This kind of protocol is known from the prior art. However, the independent channels may also be defined differently, e.g. by different transmission technologies.

In another variant of the method according to the invention, the encryption process uses a pseudo-random function depending on a variable for representing different secret values. In a preferred implementation of the embodiment, the functional value of the pseudo-random function for each secret value is determined, resulting in one functional value in the case of one secret value and in several functional values in the case of several secret values. The encryption is such that the encrypted source data are a combination of the source data and the one or more functional values.

Preferably, the source data and the one or more functional values are respective bit sequences of the same bit length, where the encrypted source data are an XOR combination of the source data and the one or more functional values. This embodiment provides a straightforward implementation of an encryption process.

In another embodiment of the invention, at least one parameter and particularly all parameters of the one or more parameters are respective secret values being encrypted by the sender based on a shared secret between the sender and the receiver. In other words, a value derived from a respective secret value as defined in claim 1 may be a secret value encrypted based on a shared secret. The term "shared secret" refers to a secret value which shall only be known by the sender and the receiver.

The above described shared secret may be notified to the receiver before sending data based on the method of the invention. However, in a preferred embodiment of the invention, parallel to the feeding of the encrypted source data and the one or more parameters to the number of channels, the shared secret is fed by the sender to an additional channel being connected to the receiver and being independent of the channels of the number of channels.

Besides the above method for sending digital data, the invention refers to a method for processing digital data being sent by the method of the invention or by one or more preferred embodiments of the method according to the invention. To do so, a receiver performs the following steps:

- receiving in parallel the encrypted source data and the one or more parameters over the number of channels connected to the receiver;
- decrypting the encrypted source data by a decryption process which is based on the one or more secret values, a respective secret value being a parameter or being obtained by determining the secret value from which the respective parameter is derived.

In case that the method for sending digital data uses a pseudo-random function for encrypting the source data, the same pseudo-random function is used by the receiver in the method for processing digital data. Furthermore, in case that the encrypted source data are determined by an XOR combination of the source data and the one or more functional values of the pseudo-random function, the decrypted source data are determined by an XOR combination of the encrypted source data and the one or more functional values.

The invention also refers to a method for transmitting digital data from a sender to a receiver over a number of channels, where the sender performs a method for sending digital data according to the invention or one or more preferred embodiments thereof and where the receiver performs a method for processing digital data according to the invention or one or more preferred embodiments thereof.

Moreover, the invention refers to a sender for sending digital data, wherein the sender comprises means for performing the method for sending digital data according to the invention or one or more preferred embodiments thereof.

Furthermore, the invention refers to a receiver for processing digital data wherein the receiver comprises means for performing the method for processing digital data according to the invention or one or more preferred embodiments thereof.

Additionally, the invention refers to a transmission system comprising the above sender as well as the above receiver.

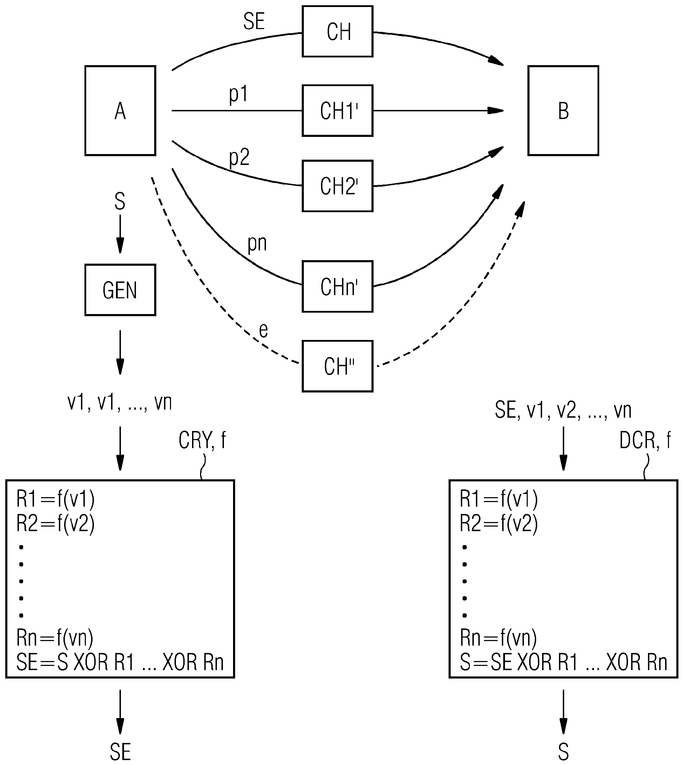

In the following, an embodiment of the invention will be described in detail with respect to the accompanying Fig. 1. This figure is a schematic diagram illustrating the transmission of digital data based on a variant of the invention.

Fig. 1 shows a scenario where digital data are transmitted between a sender A and a receiver B by using separate channels CH, CH1', CH2', ..., CHn' where channel CH corresponds to a first channel in the sense of claim 1 and where channels CH1', CH2' etc. correspond to second channels in the sense of claim 1. Optionally, an additional separate channel CH" may be used for transmitting a shared secret as will be described further on.

As mentioned above, the term "channel" is to be interpreted broadly and refers to a continuous transmission path from sender A to sender B where the path can have portions with different transmission technologies. All channels CH, CH1', CH2', ..., CHn' and also the optional channel CH" are independent from each other. I.e., an attacker listening to one channel only receives information transmitted in this channel and not from other channels. In one variant of the invention, the channels CH, CH1', CH2', ..., CHn' may refer to different UDP Internet streams or to different channels of a Multipath TCP protocol. Furthermore, the channel CH" may refer to an SMS channel.

According to Fig. 1, the sender A wishes to transmit digital source data S to the receiver B by using all independent channels CH, CH1', CH2', ..., CHn'. In the embodiment described herein, the source data refer to a bit sequence of k bits. Furthermore, the sender wishes to encrypt the source data S without using a cryptographic key being previously exchanged. To do so, the sender A at first generates in step GEN secret values v1, v2, ..., vn, where each secret value is assigned to one of the channels CH1', CH2', ..., CHn'. I.e., a secret value vj is assigned to channel CHj' (j = 1, 2, ..., n). The term "secret value" means that the corresponding value is only known by the sender at the time of its generation. In the embodiment described herein, the secret values v1 to vn are generated randomly by using a pseudo-random function.

Based on the secret values v1 to vn, the sender A performs an encryption process CRY using another pseudo-random function f where this function depends on a variable for representing different values v1 to vn. For encrypting the source data S, the sender at first determines functional values Rj = f(vj) (j = 1, ..., vn). In the embodiment described herein, those functional values Rj are sequences of k pseudo-random bits. Thereafter, the encrypted source data SE are computed by the XOR combination of the original source data S with all functional values R1 to Rn, i.e.:

$$\texttt{SE = S XOR R1 XOR R2 XOR R3 XOR ..... XOR Rn-1 XOR Rn.}$$

The XOR operation is performed bit by bit for corresponding bit pairs of the bit sequences. The encrypted source data SE determined by this encryption process are thereafter fed by the sender A to the channel CH.

Parallel to feeding the encrypted source data SE to channel CH, the parameters p1, p2, ..., pn are fed to the channels CH1', CH2', ..., CHn'. In the embodiment described herein, those parameters are equal to the secret values, i.e. vj = pj. Alternatively, each parameter p1, ..., pn may be derived from a respective secret value. In a preferred embodiment, this derivation is an encryption of the respective secret value by an encryption method using a shared secret e which forms a symmetric key for this encryption method. Any known encryption method can be used for encrypting the secret values v1 to vn. The shared secret e may be notified to the sender A and the sender B before performing the transmission over the channels CH, CH1', CH2', ..., CHn'. Nevertheless, the shared secret may also be transmitted from sender A to sender B by the separate independent channel CH" parallel to the transmission over the other channels, as indicated by the dashed arrow in Fig. 1. Moreover, the shared secret e may also be used as another parameter from which the pseudo-random function f depends.

The receiver B receives over the respective channels the encrypted source data SE as well as the parameters p1, p2, ..., pn which correspond to the secret values v1 to vn in the embodiment described herein. In order to restore the source data S, the receiver B performs a decryption DCR which is the inverse of the encryption CRY performed by the sender. The decryption DCR uses the same pseudo-random function f as the encryption in the sender. Based on this function, the receiver determines corresponding functional values R1, R2, ..., Rn. Thereafter, the encrypted source data SE are XORed with all functional values R1, R2, ..., Rn, resulting in the original source data S. In other words, the source data are determined as follows:

$$\texttt{S = SE XOR R1 XOR R2 XOR R3 XOR ..... XOR Rn-1 XOR Rn.}$$

In the following, an example for the transmission method in Fig. 1 is given where the channel CH and only a single channel CH1' are used. In this example, the sender wishes to send the following bit sequence S to the receiver:

$$\texttt{S = [1011101010010101].}$$

To do so, the sender at first generates as a secret value the random number v1 = 45. This secret value is fed to the pseudo-random function f which outputs the following functional value R1:

$$\texttt{R1 = [0111001101001111].}$$

In a next step, the sender generates the encrypted source data SE by the XOR combination of the source data S with the functional value R1, i.e. the encrypted source data are determined as follows:

$$\texttt{SE = S XOR R1 =}$$
$$\texttt{[1011101010010101] XOR [0111001101001111] =}$$
$$\texttt{[1100100111011010].}$$

Thereafter, the sender simultaneously sends the encrypted source data SE over channel CH1 and the secret value v1 over channel CH1'. These data are received by the receiver which at first determines R1 based on the pseudo-random function f by the use of the secret value 45 as follows:

$$\texttt{R1 = f(45) = [0111001101001111].}$$

Thereafter, the receiver recovers the original source data by XORing R1 with the encrypted source data SE.

I.e., the original source data are determined as follows:

```
S = SE XOR R1 =
[11000100111011010] XOR [01111001101001111] =
[10111101010010101].
```

The invention as described in the foregoing has several advantages. Particularly, an encrypted transmission of source data is provided without the need of exchanging cryptographic keys beforehand. This is achieved by transmitting secret values parallel with the encrypted source data. Thereby, a high security is achieved due to the use of independent channels for transmitting the encrypted source data and the secret values. Furthermore, the security of the transmitting method can be enhanced by additionally encrypting the secret values transmitted from the sender to the receiver.

**Claims**

1. A method for sending digital data over a number of channels (CH, CH1', CH2', ..., CHn'), wherein a sender (A) performs the following steps:

   - generating (GEN) one or more secret values (v1, v2, ..., vn);
   - encrypting (CRY) source data (S) by an encryption process (CRY) which is based on the one or more secret values (v1, v2, ..., vn) ;
   - feeding in parallel the encrypted source data (SE) and one or more parameters (p1, p2, ..., pn) to a number of channels (CH, CH1', CH2', ..., CHn') connected to a receiver (B), where each parameter (p1, p2, ..., pn) is a respective secret value (v1, v2, ..., vn) or a value derived from a respective secret value (v1, v2, ..., vn) of the number of secret values (v1, v2, ..., vn) and where the number of channels (CH, CH1', CH2', ..., CHn') comprises a number of first channels (CH) and a number of second channels (CH1', CH2', ..., CHn'), each first channel (CH) being independent of each second channel (CH1', CH2', ..., CHn'), where the encrypted source data (SE) are fed to the number of first channels (CH) and the one or more parameters (p1, p2, ..., pn) are fed to the number of second channels (CH1', CH2', ..., CHn').

2. The method according to claim 1, wherein the number of first channels (CH) comprises several first channels (CH), where a different portion of the encrypted source data (SE) is fed to each first channel (CH), where the first channels (CH) preferably are independent of each other.

3. The method according to claim 1 or 2, wherein the one or more parameters (p1, p2, ..., pn) comprise several parameters, where each parameter (p1, p2, ..., pn) is fed to a separate second channel (CH1', CH2', ..., CHn'), where the second channels (CH1', CH2', ..., CHn') preferably are independent of each other.

4. The method according to one of the preceding claims, wherein the number of channels (CH, CH1', CH2', ..., CHn') are channels of a Multipath TCP protocol.

5. The method according to one of the preceding claims, wherein the encryption process (CRY) uses a pseudo-random function (f) depending on a variable for representing different secret values (v1, v2, ..., vn).

6. The method according to claim 5, wherein the functional value (R1, R2, ..., Rn) of the pseudo-random function (f) for each secret value (v1, v2, ..., vn) is determined, resulting in one or more functional values (R1, R2, ..., Rn), the encrypted source data (SE) being a combination of the source data (SD) and the one or more functional values (R1, R2, ..., Rn).

7. The method according to claim 6, wherein the source data (S) and the one or more functional values (R1, R2, ..., Rn) are respective bit sequences of the same bit length, the encrypted source data (SE) being an XOR combination of the source data (S) and the one or more functional values (R1, R2, ..., Rn).

8. The method according to one of the preceding claims, wherein at least one parameter (p1, p2, ..., pn) is a secret value being encrypted by the sender (A) based on a shared secret (e) between the sender (A) and the receiver (B).

9. The method according to claim 8, wherein, parallel to the feeding of the encrypted source data (SE) and the one or more parameters (p1, p2, ..., pn) to the number of channels (CH, CH1', ..., CHn), the shared secret (e) is fed by the sender (A) to an additional channel (CH") being connected to the receiver (B) and being independent of the channels of the number of channels (CH, CH1', CH2', ..., CHn').

10. A method for processing digital data being sent by a method according to one of the preceding claims, wherein a receiver (B) performs the following steps:

   - receiving in parallel the encrypted source data (SE) and the one or more parameters (p1, p2, ..., pn) over the number of channels (CH, CH1', CH2', ..., CHn') connected to the receiver (B);
   - decrypting (DCR) the encrypted source data (SE) by a decryption process (CRY) which is based on the one or more secret values (v1, v2, ..., vn), a respective secret value (v1, v2, ..., vn) being a parameter (p1, p2, ..., pn) or being obtained by determining the secret value (v1, v2, ..., vn) from which the respective parameter (p1, p2, ..., pn) is derived.

11. A method for transmitting digital data from a sender (A) to a receiver (B) over a number of channels (CH, CH1', CH2', ..., CHn'), wherein the sender (A) performs a method according to one of claims 1 to 9 and the receiver (B) performs a method according to claim 10.

12. A sender for sending digital data, wherein the sender (A) comprises means for performing a method according to one of claims 1 to 9.

13. A receiver for processing digital data wherein the receiver (B) comprises means for performing a method according to claim 10.

14. A transmission system, comprising a sender (A) according to claim 12 and a receiver (B) according to claim 13.


**Amended claims in accordance with Rule 137(2) EPC.**

1. A method for sending digital data over a number of channels (CH, CH1', CH2', ..., CHn'), wherein a sender (A) performs the following steps:

   - generating (GEN) one or more secret values (v1, v2, ..., vn) ;
   - encrypting (CRY) source data (S) by an encryption process (CRY) which is based on the one or more secret values (v1, v2, ..., vn) ;

   **characterized in that**

   - feeding in parallel the encrypted source data (SE) and one or more parameters (p1, p2, ..., pn) to a number of channels (CH, CH1', CH2', ..., CHn') connected to a receiver (B), where each parameter (p1, p2, ..., pn) is a respective secret value (v1, v2, ..., vn) or a value derived from a respective secret value (v1, v2, ..., vn) of the number of secret values (v1, v2, ..., vn), the derived value being a secret value being encrypted by the sender (A) based on a shared secret (e) between the sender (A) and the receiver (B), and where the number of channels (CH, CH1', CH2', ..., CHn') comprises a number of first channels (CH) and a number of second channels (CH1', CH2', ..., CHn'), each first channel (CH) being independent of each second channel (CH1', CH2', ..., CHn'), where the encrypted source data (SE) are fed to the number of first channels (CH) and the one or more parameters (p1, p2, ..., pn) are fed to the number of second channels (CH1', CH2', ..., CHn').

2. The method according to claim 1, wherein the number of first channels (CH) comprises several first channels (CH), where a different portion of the encrypted source data (SE) is fed to each first channel (CH), where the first channels (CH) preferably are independent of each other.

3. The method according to claim 1 or 2, wherein the one or more parameters (p1, p2, ..., pn) comprise several parameters, where each parameter (p1, p2, ..., pn) is fed to a separate second channel (CH1', CH2', ..., CHn'), where the second channels (CH1', CH2', ..., CHn') preferably are independent of each other.

4. The method according to one of the preceding claims, wherein the number of channels (CH, CH1', CH2', ..., CHn') are channels of a Multipath TCP protocol.

5. The method according to one of the preceding claims, wherein the encryption process (CRY) uses a pseudo-random function (f) depending on a variable for representing different secret values (v1, v2, ..., vn).

6. The method according to claim 5, wherein the functional value (R1, R2, ..., Rn) of the pseudo-random function (f) for each secret value (v1, v2, ..., vn) is determined, resulting in one or more functional values (R1, R2, ..., Rn), the encrypted source data (SE) being a combination of the source data (SD) and the one or more functional values (R1, R2, ..., Rn).

7. The method according to claim 6, wherein the source data (S) and the one or more functional values (R1, R2, ..., Rn) are respective bit sequences of the same bit length, the encrypted source data (SE) being an XOR combination of the source data (S) and the one or more functional values (R1, R2, ..., Rn) .

8. The method according to one of the preceding claims, wherein, parallel to the feeding of the encrypted source data (SE) and the one or more parameters (p1, p2, ..., pn) to the number of channels (CH, CH1', ..., CHn), the shared secret (e) is fed by the sender (A) to an additional channel (CH") being connected to the receiver (B) and being independent of the channels of the number of channels (CH, CH1', CH2', ..., CHn').

9. A method for processing digital data being sent by a method according to one of the preceding claims, wherein a receiver (B) performs the following steps:

- receiving in parallel the encrypted source data (SE) and the one or more parameters (p1, p2, ..., pn) over the number of channels (CH, CH1', CH2', ..., CHn') connected to the receiver (B);
- decrypting (DCR) the encrypted source data (SE) by a decryption process (CRY) which is based on the one or more secret values (v1, v2, ..., vn), a respective secret value (v1, v2, ..., vn) being a parameter (p1, p2, ..., pn) or being obtained by determining the secret value (v1, v2, ..., vn) from which the respective parameter (p1, p2, ..., pn) is derived.

10. A method for transmitting digital data from a sender (A) to a receiver (B) over a number of channels (CH, CH1', CH2', ..., CHn'), wherein the sender (A) performs a method according to one of claims 1 to 9 and the receiver (B) performs a method according to claim 10.

11. A sender for sending digital data, wherein the sender (A) comprises means for performing a method according to one of claims 1 to 8.

12. A receiver for processing digital data wherein the receiver (B) comprises means for performing a method according to claim 9.

13. A transmission system, comprising a sender (A) according to claim 11 and a receiver (B) according to claim 12.

SE   CH

A   p1   CH1'

p2   CH2'

S   pn   CHn'

GEN   e   CH''

B

v1, v1, ..., vn      SE, v1, v2, ..., vn

CRY, f      DCR, f

```
R1=f(v1)
R2=f(v2)
  .
  .
  .
Rn=f(vn)
SE=S XOR R1 ... XOR Rn
```

```
R1=f(v1)
R2=f(v2)
  .
  .
  .
Rn=f(vn)
S=SE XOR R1 ... XOR Rn
```

SE           S

Europäisches
Patentamt

European
Patent Office

Office européen
des brevets

# EUROPEAN SEARCH REPORT

**Application Number**

EP 17 19 0780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/271163 A1 (GREENSPAN STEVEN L [US] ET AL) 24 September 2015 (2015-09-24) <br> * abstract * <br> * paragraphs [0015] - [0081] * <br> * figures 1-3 * <br> ----- | 1-14 | INV. <br> H04L9/08 |
| X | WO 2016/135726 A1 (SECRET DOUBLE OCTOPUS LTD [IL]) 1 September 2016 (2016-09-01) <br> * abstract * <br> * page 1, line 1 - page 33, line 17 * <br> * figures 1,2 * <br> ----- | 1-14 | |

**TECHNICAL FIELDS SEARCHED (IPC)**

H04L
G06F

The present search report has been drawn up for all claims

| Place of search | Date of completion of the search | Examiner |
|---|---|---|
| Munich | 7 March 2018 | Mariggis, Athanasios |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons
.............................................................................
& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 17 19 0780

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2018

| Patent document cited in search report | | Publication date | Patent family member(s) | Publication date |
|---|---|---|---|---|
| US 2015271163 | A1 | 24-09-2015 | NONE | |
| WO 2016135726 | A1 | 01-09-2016 | NONE | |

For more details about this annex : see Official Journal of the European Patent Office, No. 12/82

EPO FORM P0459